# EUROPÄISCHE PATENTANMELDUNG

(11) **EP 4 803 295 A1**
(43) Veröffentlichungstag der Anmeldung: **09.09.2026**
(21) Anmeldenummer: 26162174.2
(22) Anmeldetag: 04.03.2026
(51) Int. Cl.: B29D 29/00, F16G 1/08

(54) **VERFAHREN ZUR NACHBEARBEITUNG VULKANISIERTER KRAFTÜBERTRAGUNGSRIEMEN UND SOLCHE KRAFTÜBERTRAGUNGSRIEMEN**

(30) Priorität: 07.03.2025 DE 102025108695
(71) Anmelder: Arntz Beteiligungs GmbH & Co. KG, 37671 Höxter (DE)
(72) Erfinder: Ohlhäuser, Rudolf, 33039 Nieheim (DE); Schäper, Michael, 33098 Paderborn (DE)
(74) Vertreter: Kröncke, Rolf

(57) **Zusammenfassung**

Die Erfindung betrifft ein Verfahren zur Nachbearbeitung von vulkanisierten Kraftübertragungsriemen, wobei auf mindestens einer Seite des Kraftübertragungsriemens ein Abtragen von oberflächigen Vulkanisierungsprodukten erfolgt. In einem weiteren Aspekt sind entsprechend erhältliche, nachbearbeitete vulkanisierte Kraftübertragungsriemen, insbesondere Keilriemen oder Kraftbänder offenbart. Schließlich beschreibt die vorliegende Erfindung die Verwendung der erfindungsgemäß bearbeiteten Kraftübertragungsriemen im Bereich von Kupplungsriemen.

## Beschreibung

Die Erfindung betrifft ein Verfahren zur Nachbearbeitung von vulkanisierten Kraftübertragungsriemen, wobei auf mindestens einer Seite des Kraftübertragungsriemens ein Abtragen von oberflächigen Vulkanisierungsprodukten erfolgt. In einem weiteren Aspekt sind entsprechend erhältliche, nachbearbeitete vulkanisierte Kraftübertragungsriemen, insbesondere Keilriemen oder Kraftbänder offenbart. Schließlich beschreibt die vorliegende Erfindung die Verwendung der erfindungsgemäß bearbeiteten Kraftübertragungsriemen im Bereich von Kupplungsriemen.

### Stand der Technik

Kraftübertragungsriemen oder Antriebsriemen werden in verschiedensten Arten von Riemenantrieben eingesetzt, z. B. in Form von Keilriemen, Zahnriemen oder sonstigen Arten von Reibriemen. Dabei sind verschiedene Aspekte bei der Kraftübertragung zu berücksichtigen. Neben dem Verschleiß der Antriebsriemen spielt der Reibwert und dessen Reduzierung eine wichtige Rolle bei der Kraftübertragung. Hohe Reibwerte, auch als Reibbeiwert oder Reibungskoeffizient ausgedrückt, erhöhen den Wirkungsgrad des Riementriebs aufgrund der inneren und äußeren Reibung bei Übertragung des Drehmomentes. Gerade im Bereich von Keilriemen und Kraftbändern als Antriebsriemen spielen die Reibwerte und deren Reduzierung eine wichtige Rolle, hier bei Spezialanwendungen, wie bei Kupplungsriemen.

Die Übertragung der Antriebskraft oder der Abtriebskraft zwischen einer Riemenscheibe und einem Antriebsriemen oder Kraftübertragungsriemen, diese beiden Ausdrücke werden im Folgenden synonym eingesetzt, kann formschlüssig und/oder durch Haftreibung und/oder Gleitreibung erfolgen. Bei Übertragung der Kraft durch Haftreibung zwischen der Kraftübertragungszone und einer Mantelfläche einer Riemenscheibe kann die Kraftübertragungszone flach, wie z. B. bei Flachriemen, mit einer in Laufrichtung und Querschnittprofil gleich bleibender Rippenstruktur, wie bei Keilrippenriemen, oder mit einer in Laufrichtung Querschnittsprofil gleichbleibenden, trapezförmigen Querschnitt, wie beispielsweise bei Keilrippenriemen, ausgebildet sein.

Keilriemen weisen unter anderem eine Ummantelung mit Gewebe, meist ein Textilgewebe, auf. Diese Gewebe, auch als Textilbeschichtungen bezeichnet, dienen zur besseren Kraftübertragung zwischen dem Kraftübertragungsriemen und den Kraftübertragungsscheiben. Darüber hinaus erlauben sie ein Vermindern des Abriebs, ein Verringern der Einrissneigung sowie eine Erhöhung der Verschleißbeständigkeit, aber auch eine Verbesserung in den Reibwerten. Dieses gilt insbesondere im Bereich der Kupplungsriemen und anderer Riemen mit Sonderfunktionen.

Solche Gewebe werden mit verschiedenen Techniken auf den Riemenkörper der Antriebsriemen aufgebracht. Dabei ist eine gute Verbindung des Riemenkörpers mit dem Gewebe wichtig. Hierzu können zum Beispiel Haftvermittler und vulkanisierbare Polymermischungen auf das Gewebe einseitig aufgebracht werden, um das Gewebe mit dem Riemenkörper zu verbinden. Dabei tritt allerdings häufig das Problem auf, dass das entsprechende Polymer oder der Haftvermittler durch die Maschen des Gewebes dringt und somit auf der äußeren Oberfläche vorliegt, dies beeinflusst negativ die Eigenschaften der Riemen, z. B. den Reibwert. Die Beschichtungen der Gewebe mit den entsprechenden Polymermischungen, z. B. von Chloropren-Mischungen zur Herstellung dieser semibeschichteten Gewebe erfolgen grundsätzlich mittels Streichverfahren oder Friktionsverfahren. Bei dem Streichverfahren erfolgt dabei in aufwendigen Schritten die Herstellung von einer einseitigen Sperrschicht, auf die dann nicht vulkanisierte Chloropren-Polymer-Mischungen zur Haftvermittlung aufgebracht werden. Im alternativen Friktionsverfahren erfolgt das Einbringen der Mischung z. B. mithilfe eines Kalanders. Hier drückt aber üblicherweise die Mischung durch die Maschen des Gewebes derart durch, dass eine nicht immer gewünschte beidseitige Beschichtung erfolgt. Dadurch liegt die Mischung auch auf der äußeren Oberfläche des anschließend hergestellten Kraftübertragungsriemens vor.

Es wurden verschiedene Lösungswege vorgeschlagen, um das Vorliegen dieser Vulkanisate bzw. Vulkanisationsprodukte auf der äußeren Oberfläche des Gewebes zu verhindern, üblicherweise durch Modifikation der entsprechenden Mischungen oder durch Ausbildung von Sperrschichten.

Es ist somit wünschenswert, Kraftübertragungsriemen bereitzustellen, deren Reibbeiwerte gering sind unter einem geringen Abrieb der Textilauflage, so dass Verschleiß- und Reibungswiderstand reduziert sind.

Diese Aufgabe wird durch ein Verfahren eingangs genannter Art dadurch gelöst, dass ein vulkanisierter Kraftübertragungsriemen nachbearbeitet wird, derart, dass auf mindestens einer Seite des Kraftübertragungsriemens oberflächiges Vulkanisierungsprodukt abgetragen wird. Bei diesen oberflächig vorliegenden Vulkanisierungsprodukten handelt es sich insbesondere um Vulkanisationshaut, die als ein Teil des Vulkanisierungsprozesses entsteht. Die Vulkanisationshaut bildet sich während des Vulkanisationsprozesses an der Oberfläche der Antriebsriemen. Es zeigte sich nun, dass ein Abtrag dieser Vulkanisationsprodukte, wie der Vulkanisationshaut, eine Verringerung des Reibbeiwertes erlaubt. Darüber hinaus ist es erstrebenswert, dass weitere Mischungsanteile aus den Gewebemaschen entfernt werden.

Es zeigte sich, dass durch einfachen Materialabtrag des oberflächigen Vulkanisierungsproduktes der Reibbeiwert gesenkt werden kann, insbesondere ohne andere Parameter des Kraftübertragungsriemens zu verschlechtern.

In einer Ausführungsform ist dabei das abzutragende Oberflächenvulkanisationsprodukt die Vulkanisationshaut ausgebildet während das Vulkanisationsprozesses.

Gemäß einer vorteilhaften Ausgestaltung der Erfindung ist vorgesehen, dass der Abtrag von Vulkanisationsprodukt auf mindestens einer Kraftübertragungsfläche, bevorzugt einer, wie von beiden voneinander abgewandten Seitenflächen als Kraftübertragungsflächen eines Kraftübertragungsriemens, erfolgt.

Darüber hinaus kann der Materialabtrag auch auf den Riemengrund erfolgen. Üblicherweise ist ein Abtrag auf den Riemenrücken nicht erforderlich, da der Riemenrücken nicht zur Übertragung des Drehmomentes genutzt wird. Ein Abtrag erlaubt aber eine verbesserte Riemenkennzeichungsfähigkeit des Riemens auf dem Riemenrücken.

Gemäß einer vorteilhaften Ausgestaltung der Erfindung ist vorgesehen, dass der Kraftübertragungsriemen ein Gewebe, insbesondere ein Textilgewebe, aufweist. Das Gewebe, wie das Textilgewebe, umhüllt zumindest teilweise den Riemenkörper. Das abzutragende Vulkanisationsprodukt findet sich vor dem Abtragen dabei auf der äußeren Oberfläche des Gewebes, d. h., im Falle von Gewebe, wie Textilgewebe, handelt es sich üblicherweise um eine durch dieses Gewebe durchgedrungene vulkanisierte Mischung, auch als Friktionsmischung bezeichnet, z. B. die den Riemenkörper ausbildende Mischung oder des Haftvermittlers.

Ein Abtragen dieser Vulkanisationsprodukte von dem Gewebe führt zu einem mindestens teilweise Freiliegen des Gewebes, sodass das Gewebe ohne Umhüllung durch das Vulkanisationsprodukt auf der äußeren Oberfläche und somit im Kontakt mit den entsprechenden Antriebs- und Abtriebsriemenscheiben eines Riementriebes vorliegt.

Es zeigte sich, dass diese auf der äußeren Oberfläche vorliegenden Vulkanisationsprodukte, die Friktionsmischung, insbesondere die Vulkanisationshaut, negativ den Reibbeiwert beeinflussen.

Die erfindungsgemäße Nachbearbeitung der vulkanisierten Kraftübertragungsriemen durch Abtrag der oberflächigen Vulkanisationsprodukte überwindet dieses Problem.

Dieser Materialabtrag kann gemäß bekannten Verfahren erfolgen. Ein besonders geeignetes Verfahren ist ein zumindest teilweises Abschleifen der Vulkanisationsprodukte, wie der Vulkanisationshaut, an zumindest einer der Kraftübertragungsflächen, wie mindestens einer der Seitenflächen des Kraftübertragungsriemens. Hierdurch können die Reibbeiwerte gesenkt und die vorteilhaften Eigenschaften der vorliegenden Gewebe genutzt werden. Das Abtragen kann auch durch Abbürsten dieser Vulkanisationsprodukte durch geeignete Mittel erfolgen.

In einer vorteilhaften Ausgestaltung der Erfindung ist der Kraftübertragungsriemen ein Keilreimen oder ein Riemenband mit entsprechenden Keilriemenelementen.

Die Keilriemen weisen üblicherweise eine im wesentlichen vollständige Umhüllung mit Textilgewebe auf, entsprechend richtet sich das erfindungsgemäße Verfahren zur Nachbearbeitung insbesondere auf die Nachbearbeitung von vulkanisierten Keilriemen, um die Vulkanisationshaut mindestens auf den Seitenflächen der Keilriemen zumindest teilweise z. B. durch Schleifen oder Bürsten, zu entfernen.

In einer weiteren Ausgestaltung des erfindungsgemäßen Verfahrens richtet sich dieses auf eines, wobei der Kraftübertragungsriemen ein Keilriemen ist, wobei dieser Keilriemen mit einem umhüllenden Gewebe, insbesondere Textilgewebe, ausgebildet ist und wobei dieses Gewebe zumindest teilweise in der Oberfläche durch Abtragen von Vulkanisationsprodukten freigelegt wird. Dadurch wird der Reibbeiwert dieser Antriebsriemen verringert, die Lebensdauer ist durch das Vorliegen der textilen Auflage erhöht, während Geräusche und Laufruhe verbessert sind. In einer weiteren Ausführungsform ist der Kraftübertragungsriemen ein Kupplungsriemen. Das erfindungsgemäße Verfahren eignet sich insbesondere auch zur Bearbeitung von Kraftübertragungsriemen mit Sonderfunktionen und Spezialanwendungen.

In einem weiteren Aspekt wird weiterhin ein vulkanisierter Kraftübertragungsriemen bereitgestellt. Dieser vulkanisierte Kraftübertragungsriemen ist erhältlich nach dem erfindungsgemäßen Verfahren. Der Kraftübertragungsriemen zeichnet sich dadurch aus, dass zumindest an seiner Seite, insbesondere auf den Seitenflächen, zumindest teilweise das Vulkanisierungsprodukt abgetragen wurde. Insbesondere erfolgte dieser Abtrag durch Schleifen. Der vulkanisierte Kraftübertragungsriemen ist dabei in einer bevorzugten Ausführungsform ein Keilriemen oder ein Kraftband aus mehreren Keilriemen. Die erfindungsgemäßen Keilriemen, erhältlich mit dem erfindungsgemäßen Verfahren, sind dabei derart ausgebildet, dass die den Riemenkörper umhüllenden Gewebe, insbesondere als das Textilgewebe, durch den Materialabtrag auf der Oberfläche vorliegen, so dass dieses direkt mit der Oberfläche der Riemenscheibe in Kontakt treten, um ein entsprechendes Drehmoment zu übertragen.

Als Gewebe, insbesondere Textilgewebe, können vorliegend jede beliebigen für Riementextilen gebräuchliche oder geeignete Textilmaterialien verwendet werden. Geeignete Textilformen sind Gewebe, Gewirke, Gestricke oder Vlies, wie sie dem Fachmann auch hinsichtlich der dazu verwendeten Qualitäten, Textilmaterialien bzw. Faden und/oder Fasermaterial, Faserstärken, Gewebedichten, Bindungen und Flächengewichten, bekannt sind. In einer Ausführungsform ist dabei das Textilmaterial eines ausgewählt aus Baumwolle, Polyamid, Polyester, Aramid oder Polyester-Baumwollgemisch. Diese Materialien können auch in Kombination eingesetzt werden.

Die Gewebeauflage ist im textiltechnischen Sinne ein textiles Flächengebilde aus dem Fadensystem Kette und Schuss mit entsprechenden Kettfäden für das Fadensystem Kette und Schussfäden für das Fadensystem Schuss. Die Textilmaterialien sind übliche, kommerziell erhältliche Textilmaterialien, wobei standardmäßig solche als Gewebe eingesetzt werden, bei denen der Kettenfadenmassenanteil stets größer ist als der Schussfadenmassenanteil, alternativ kann aber auch der Schussfadenmassenanteil größer sein als der Kettfadenmassenanteil. Es gibt auch Gewebe, bei denen eine gleich Fadenzahl vorliegt. D. h., es können bekannte Textilmaterialien, die auch bereits für Antriebsriemen einschließlich Zahnriemen, Keilriemen und Keilrippenriemen eingesetzt werden, eingesetzt werden.

Der Antriebsriemen kann auch in Form eines Breitkeilriemens oder Schmalkeilriemens vorliegen.

Erfindungsgemäße Riemen sind insbesondere geeignet im Bereich vom Maschinenbau, wo eine höhere Leistungsübertragung gewünscht wird. Dieses betrifft insbesondere Schmalkeilriemen, z. B. solche der gängigen Größe SPZ, SPA, SPB und SPC.

Andere Bereiche für die die erfindungsgemäß hergestellten Kraftübertragungsriemen besonders geeignet sind schließen ein: Riemen mit Sonderfunktionen und Spezialbereichen, wie Kupplungsriemen. Kupplungsriemen bestehen meist aus reibungsarmen Spezialgewebe und u.a. einem Kupplungsgewebe und sind speziell für Maschinen mit Kupplungsfunktion entwickelt, die mittels Rückenspannrollen gespannt werden. Das äußere Gewebe gewährleistet einen geräuschlosen Kupplungseingriff und eine erhöhte Verschleißbeständigkeit. Weiterhin ist eine hohe Festigkeit und eine sehr gute Beständigkeit gegen Stoßbelastungen notwendig. Solche Riemen werden z.B. bei der Garten- und Parkpflege eingesetzt, wie Aufsitz-Rasenmäher und Bodenfräsen. Bei diesen Maschinen hängen die Anforderungen an die Kraftübertragung stark vom jeweiligen Einsatz ab. Diese Keilriemen lassen sich auch als "Problemlöser" bei industriellen Antrieben einsetzen.

Die Erfindung wird nachfolgend anhand von Ausführungsbeispielen unter Verwendung von Zeichnungen näher erläutert.

Es zeigen:

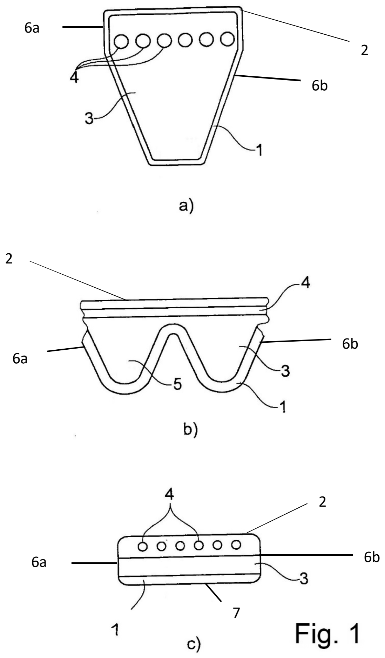

- Figur 1: Die Figur 1 zeigt Kraftübertragungsriemen als Standardriemen zur entsprechenden Nachbearbeitung der Oberflächen.
- Figur 1a: In der Figur 1a wird ein Keilriemen mit vollständiger Textilummantelung 1 gezeigt. Dargestellt auch die vom Textil 1 ummantelte Kraftübertragungszone 3 und die Festigkeitsträger 4 sowie der Riemenrücken 2. Hier erfolgt üblicherweise die erfindungsgemäße Nachbearbeitung des Riemens zumindest auf den Seitenflächen 6a und 6b.
- Figur 1b: zeigt einen Zahnriemen mit den in Querrichtung angeordneten Zähnen 5 und längs verlaufenden Festigkeitsträgern 4 sowie der Kraftübertragungszone 3 und dem Riemenrücken 2. Die nachbearbeitete Fläche umfasst dabei bevorzugt das Textilmaterial 1 auf der Kraftübertragungszone 3 und hier die Seitenflächen 6a und 6b.
- Figur 1c: zeigt einen Flachriemen, dessen Textilauflage 1 auf der Kraftübertragungszone 3 aufliegt und erfindungsgemäß nachbearbeitet wird. Eine weitere Nachbearbeitung kann auch an den Seitenflächen 6a, 6b sowie auch dem Riemengrund 7 erfolgen. Dargestellt ebenfalls die Festigkeitsträger 4 sowie der Riemenrücken 2.

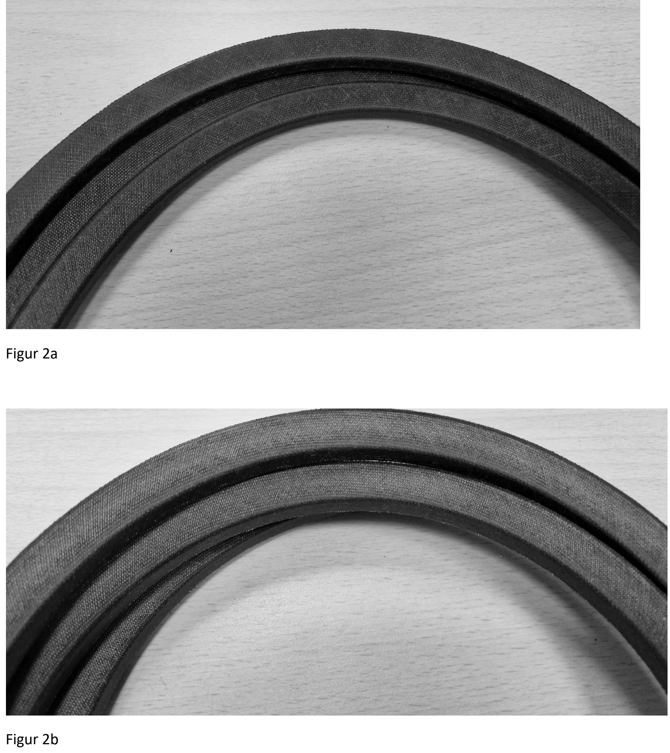

- Figur 2: Die Figur 2 zeigt einen erfindungsgemäßen Keilriemen vor (Fig. 2a) und nach (Fig. 2b) Nachbearbeitung.

Deutlich ist in der Figur 2b bei dem erfindungsgemäß behandelten Riemen der Abtrag der oberflächigen Vulkanisierungsprodukte im Vergleich zu dem Bild der Figur 2a zu erkennen, dieser Abtrag erlaubt ein Verringern der Reibbeiwerte und damit einer Reduktion des Verschleißes des Riemens.

### Reibwertmessung Kraftübertragungsriemen

Die Prüfung wurde an einer Zugprüfmaschine durchgeführt. Dabei wird ein Riemenstück mit Textilummantelung über eine profilierte Riemenscheibe gezogen (Prüfgeschwindigkeit: 1000 mm/min / Messweg 380mm / 5 Messzyklen), wobei das obere Riemenende in eine Klemme an einem Spannzylinder mit Kraftmessdose (10 kN) befestigt, und an das frei hängende Riemenende ein Gewicht (1200g) gehängt wird. Aus dem ermittelten Kraft-Weg-Diagramm ergibt sich µ als Reibwert. Die Ergebnisse für Riemen auf CR-Basis und auf EPDM-Basis sind in der Tabelle 1 dargestellt. Dabei wurden 5 Messungen pro Riemen durchgeführt und der Mittelwert ermittelt.

**Tabelle 1:**

| Polymer | Zustand | Ermittelte Reibwerte | Mittelwert |
|---|---|---|---|
| CR | Neu | 0,688\|0,709\|0,718\|0,717\|0,718 | 0,710 |
| CR | Geschliffen | 0,454\|0,439\|0,445\|0,453\|0,456 | 0,449 |
| EPDM | Neu | 0,821\|0,857\|0,879\|0,894\|0,902 | 0,871 |
| EPDM | Geschliffen | 0,51110,49610,50610,51710,526 | 0,511 |

Deutlich ist die Reduzierung des Reibwerts erfindungsgemäß nachbearbeiteter Riemen zu erkennen. Dieses gilt sowohl für solche Riemen auf CR-Basis als auch auf EPDM-Basis.

### Bezugszeichen

- 1: Textilmaterial
- 2: Riemenrücken
- 3: Kraftübertragungszone
- 4: Festigkeitsträger
- 5: Zähne
- 6, 6a, 6b: Seitenflächen
- 7: Riemengrund

## Patentansprüche

1. Verfahren zur Nachbearbeitung von vulkanisierten Kraftübertragungsriemen, umfassend den Schritt des Abtragens von oberflächigen Vulkanisierungsprodukten auf mindestens einer Kraftübertragungsfläche (3) des Kraftübertragungsriemens.

2. Verfahren zur Nachbearbeitung von vulkanisierten Kraftübertragungsriemen nach Anspruch 1, wobei das Vulkanisationsprodukt die Vulkanisationshaut umfasst.

3. Verfahren zur Nachbearbeitung von vulkanisierten Kraftübertragungsriemen nach Anspruch 1 oder 2, wobei von mindestens einer, bevorzugt von beiden voneinander abgewandte Seitenflächen (6a, 6b) des Kraftübertragungsriemens als Kraftübertragungsflächen, oberflächig das Vulkanisationsprodukt abgetragen wird.

4. Verfahren zur Nachbearbeitung von vulkanisierten Kraftübertragungsriemen nach einem der vorherigen Ansprüche, wobei ein Gewebe (1), insbesondere ein Textilgewebe (1) den Riemenkörper mindestens teilweise umhüllt und Vulkanisationsprodukt vor dem Abtragen auf der äußeren Oberfläche des Gewebes vorliegt.

5. Verfahren zur Nachbearbeitung von vulkanisierten Kraftübertragungsriemen nach einem der vorherigen Ansprüche, wobei das Abtragen des Vulkanisationsproduktes auf den Riemengrund (7) erfolgt.

6. Verfahren zur Nachbearbeitung von vulkanisierten Kraftübertragungsriemen nach einem der vorherigen Ansprüche, wobei das Abtragen des Vulkanisationsprodukts durch Schleifen oder Bürsten erfolgt.

7. Verfahren zur Nachbearbeitung von vulkanisierten Kraftübertragungsriemen nach einem der vorherigen Ansprüche, wobei der Kraftübertragungsriemen ein Keilriemen oder ein Riemenband, wie ein Kupplungsriemen ist.

8. Verfahren zur Nachbearbeitung von vulkanisierten Kraftübertragungsriemen nach einem der vorherigen Ansprüche, wobei der Kraftübertragungsriemen ein Keilriemen ist, wobei dieser Keilriemen mit einem umhüllenden Gewebe (1), insbesondere Textilgewebe (1), ausgebildet ist, und wobei dieses Gewebe (1) zumindest teilweise an der Oberfläche durch Abtragen vom Vulkanisationsprodukt freigelegt wird.

9. Vulkanisierter Kraftübertragungsriemen, erhältlich nach einem der Ansprüche 1 bis 8.

10. Kraftübertragungsriemen nach Anspruch 9, wobei dieser ein Keilriemen oder ein Kraftband ist.

11. Verwendung eines Kraftübertragungsriemens nach Anspruch 9 oder 10 als Kupplungsriemen.

12. Verwendung eines Kraftübertragungsriemens nach Anspruch 11, wobei dieser ein Keilriemen oder Kraftband ist.
